# EUROPÄISCHE PATENTANMELDUNG

(11) **EP 0 923 218 A2**
(43) Veröffentlichungstag der Anmeldung: **16.06.1999**
(21) Anmeldenummer: 98123387.7
(22) Anmeldetag: 09.12.1998
(51) Int. Cl.: H04M 1/72

(54) **Telekommunikationsendgerät**

(30) Priorität: 10.12.1997 DE 19754728
(71) Anmelder: ROBERT BOSCH GMBH, 70442 Stuttgart (DE)
(72) Erfinder: Moeller, Stephan, 30519 Hannover (DE)

(57) **Zusammenfassung**

Es wird ein Telekommunikationsendgerät (1) vorgeschlagen, das zu einer komfortableren Eingabe von versendbaren Kurznachrichten dient. Das Telekommunikationsendgerät (1) umfaßt eine Eingabeeinheit (5), eine Anzeigeeinheit (10) und eine Sendeeinheit (15). An der Eingabeeinheit (5) ist ein Text eingebbar und an der Anzeigeeinheit (10) darstellbar. Ein eingegebener Text ist von der Sendeeinheit (15) an einen Teilnehmer eines Telekommunikations- oder Datennetzes (20) übertragbar. In einem Eingabebetriebsmodus, in dem der Text an der Eingabeeinheit (5) eingegeben wird, ist eine Kontrollinformation (25, 30, 35) an der Anzeigeeinheit (10) darstellbar. Die Kontrollinformation (25, 30, 35) hängt von der Anzahl der bereits eingegebenen Textzeichen (40) ab.

## Beschreibung

### Stand der Technik

Die Erfindung geht von einem Telekommunikationsendgerät nach der Gattung des Hauptanspruchs aus.

Aus dem Katalog 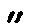 Bosch Mobiltelefone 1996/97. Erfrischende Ideen für unterhaltsame Verbindungen." ist bereits das Mobiltelefon 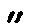 M-Com906" bekannt, bei dem Kurznachrichten eingegeben und versendet werden können. An einer Anzeigeeinheit des Mobiltelefons ist eine Anzeige von Kurznachrichten möglich.

### Vorteile der Erfindung

Das erfindungsgemäße Telekommunikationsendgerät mit den Merkmalen des Hauptanspruchs hat demgegenüber den Vorteil, daß in einem Eingabebetriebsmodus, in dem der Text an der Eingabeeinheit eingegeben wird, eine Kontrollinformation an der Anzeigeeinheit darstellbar ist und daß die Kontrollinformation von der Anzahl der bereits eingegebenen Textzeichen abhängt. Auf diese Weise wird der Bedienkomfort für den Benutzer bei der Eingabe von Kurznachrichten erhöht, da er durch die Kontrollinformation einen Überblick über die Textlänge seiner eingegebenen Kurznachricht erhält. Er kann daher auf eine gewünschte oder geforderte Textlänge für die Kurznachricht Rücksicht nehmen. Eine solche Kontrollinformation ist besonders dann von Vorteil, wenn aufgrund der Abmessungen der Anzeigeeinheit nicht der gesamte eingegebene Text für die Kurznachricht gleichzeitig darstellbar ist. Dies ist vor allem bei als Mobiltelefonen ausgebildeten Telekommunikationsendgeräten der Fall, bei denen möglichst geringe Abmessungen erzielt werden sollen.

Durch die in den Unteransprüchen aufgeführten Maßnahmen sind vorteilhafte Weiterbildungen und Verbesserungen des im Hauptanspruch angegebenen Telekommunikationsendgerätes möglich.

Besonders vorteilhaft ist es, die Darstellung der Kontrollinformationen an der Anzeigeeinheit durch Betätigung einer Taste im Eingabebetriebsmodus zu aktivieren. Auf diese Weise kann die Anzeige der Kontrollinformation vom Bedienerwunsch abhängig gemacht werden und somit eine individuelle, an die Bedürfnisse des Benutzers angepaßte Informationsdarstellung realisiert werden.

Ein weiterer Vorteil besteht darin, daß die Kontrollinformation eine erste Zahl umfaßt und daß die erste Zahl der Anzahl der bereits in dem Eingabebetriebsmodus eingegebenen Textzeichen entspricht. Auf diese Weise wird der Benutzer exakt und schnell über die Länge des bisher eingegebenen Textes für die Kurznachricht informiert. Die Darstellung einer Zahl für die bisherige Textlänge erfordert auch nur einen geringen Platzbedarf an der Anzeigeeinheit.

Ein weiterer Vorteil besteht darin, daß die Anzahl der eingebbaren Textzeichen in dem Eingabebetriebsmodus auf einen ersten vorgegebenen wert begrenzt ist, daß die Kontrollinformation eine zweite Zahl umfaßt und daß die zweite Zahl dem ersten vorgegebenen Wert abzüglich der Anzahl der bereits in dem Eingabebetriebsmodus eingegebenen Textzeichen entspricht. Auf diese Weise hat der Benutzer die Möglichkeit, den Text für seine Kurznachricht vorzeitig zu beenden. Dadurch kann verhindert werden, daß der eingegebene Text aufgrund des Erreichens des ersten vorgegebenen Wertes für die zulässige Anzahl eingebbarer Textzeichen nicht weitergeführt wird und unter Umständen mitten in einem Wort abgebrochen wird. Aufgrund der Kontrollinformation der verbleibenden Anzahl eingebbarer Textzeichen kann der Benutzer einen solchen abrupten Textabbruch verhindern.

Ein weiterer Vorteil besteht darin, daß die Kontrollinformation ein graphisches Symbol umfaßt, daß das graphische Symbol als Füllstandsanzeige ausgebildet ist und daß die Füllstandsanzeige in Abhängigkeit der Anzahl der bereits in dem Eingabebetriebsmodus eingegebenen Textzeichen und eines die Anzahl der in dem Eingabebetriebsmodus eingebbaren Textzeichen begrenzenden ersten vorgegebenen Wertes die Anzahl der noch verbleibenden eingebbaren Textzeichen in Relation zu und zusammen mit der Anzahl der bereits eingegebenen Textzeichen, vorzugsweise in Balkenform, dynamisch darstellt. Auf diese Weise kann der Benutzer noch schneller einen Überblick über die bisherige und die noch verbleibende Textlänge erhalten, da er nicht zuerst eine oder zwei an der Anzeigeeinheit dargestellte Zahlen für die bisherige und/oder die noch verbleibende Textlänge interpretieren muß.

Ein weiterer Vorteil besteht darin, daß bei Unterschreiten einer vorgegebenen Differenz zwischen einem die Anzahl der in dem Eingabebetriebsmodus eingebbaren Textzeichen begrenzenden ersten vorgegebenen Wert und der Anzahl der in dem Eingabebetriebsmodus bereits eingegebenen Textzeichen die Abgabe eines optischen und/oder eines akustischen Warnsignals erfolgt. Auf diese Weise kann der Benutzer bei der Eingabe eines Textes für eine Kurznachricht rechtzeitig auf das nahende Ende der für die Textlänge vorgesehenen Kapazitätsgrenze aufmerksam gemacht werden. Dadurch braucht der Benutzer nicht ständig die Anzahl der noch verbleibenden eingebbaren Textzeichen durch Beobachtung der entsprechenden Kontrollinformation kontrollieren. Er kann somit den Text unbesorgt bis zur Abgabe des Warnsignals eingeben und muß sich bei geeigneter Vorgabe der genannten Differenz erst nach Abgabe des Warnsignals auf eine saubere Beendigung der Texteingabe konzentrieren, bei der am Textende kein Textabbruch mitten in einem Wort erfolgt.

Ein weiterer Vorteil besteht darin, daß die Darstellung der Kontrollinformation an der Anzeigeeinheit in dem Eingabebetriebsmodus erst dann erfolgt, wenn ein zweiter vorgegebener Wert von der Anzahl der in dem Eingabebetriebsmodus bereits eingegebenen Textzeichen überschritten wird. Auf diese Weise wird verhindert, daß der Benutzer bei der Eingabe der Kurznachricht von überflüssigen Informationen an der Anzeigevorrichtung abgelenkt wird. Der zweite vorgegebene Wert sollte dabei möglichst so gewählt werden, daß die Darstellung der Kontrollinformation erst dann erfolgt, wenn der Benutzer auch ein Bedürfnis hat, über die bisherige und/oder noch verbleibende Textlänge informiert zu werden, beispielsweise um seinen Text rechtzeitig vor Erreichen einer maximal zulässigen Anzahl von Textzeichen zu beenden.

### Zeichnung

Ein Ausführungsbeispiel der Erfindung ist in der Zeichnung dargestellt und in der nachfolgenden Beschreibung näher erläutert. Es zeigen Figur 1 eine Bedienfront eines Mobiltelefons, Figur 2 ein Blockschaltbild eines Mobiltelefons und Figur 3 einen Ablaufplan für die Steuerung der Darstellung von Kontrollinformationen an einer Anzeigeeinheit des Mobiltelefons.

### Beschreibung des Ausführungsbeispiels

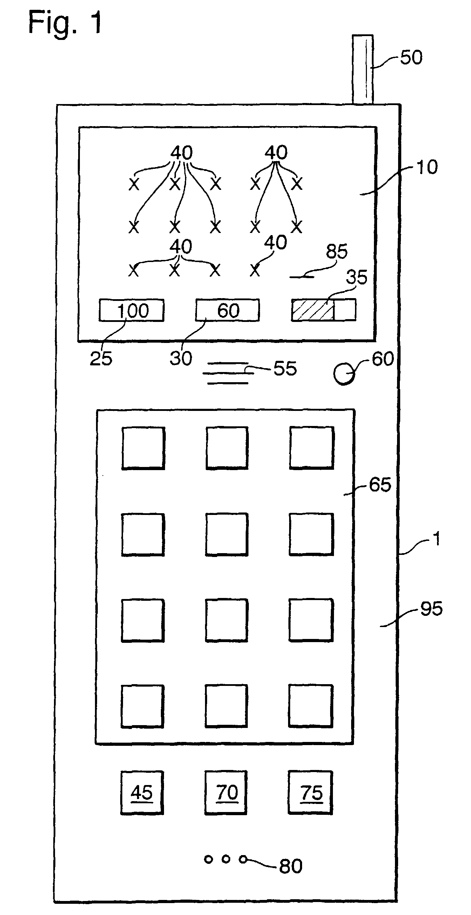

In Figur 1 ist eine Bedienfront 95 eines als Mobiltelefon ausgebildeten Telekommunikationsendgerätes 1 dargestellt. Dabei kennzeichnet 50 eine Sende-/Empfangsantenne, 10 eine als Display ausgebildete Anzeigeeinheit, 55 einen Lautsprecher, 60 eine Leuchtdiode, 65 eine alphanumerische Tastatur und 80 ein Mikrofon zur Spracheingabe, wenn über das Mobiltelefon 1 eine Sprachverbindung eingerichtet werden soll. Weiterhin ist eine Kontrolltaste 45, eine Hörertaste 70 und eine Sendetaste 75 an der Bedienfront 95 des Mobiltelefons 1 angeordnet. In einem Eingabebetriebsmodus können an der alphanumerischen Tastatur 65 Buchstaben und Ziffern eingegeben werden, die in der Reihenfolge ihrer Eingabe am Display 10 als Textzeichen 40 zur Darstellung gebracht werden. Dabei wird die Stelle des Displays 10, an der eine aktuell erfolgende Textzeicheneingabe mittels der alphanumerischen Tastatur 65 erfolgt, bis zu dieser Eingabe durch ein Leerzeichen 85 dargestellt. Das Leerzeichen 85 ist dabei hinter dem zuletzt eingegebenen Textzeichen 40 am Display 10 dargestellt. Am Display 10 ist außerdem die Anzeige einer ersten Zahl 25, einer zweiten Zahl 30 und eines graphischen Symbols 35 vorgesehen. Die erste Zahl 25, die zweite Zahl 30 und das graphische Symbol 35 sind gemäß Figur 1 gemeinsam am Display 10 dargestellt. Es kann jedoch auch vorgesehen sein, nur die erste Zahl 25, nur die zweite Zahl 30 oder nur das graphische Symbol 35 am Display 10 darzustellen. Weiterhin kann vorgesehen sein, nur die erste Zahl 25 und die zweite Zahl 30 gemeinsam zusammen am Display 10 darzustellen oder nur die erste Zahl 25 und das graphische Symbol 35 oder nur die zweite Zahl 30 und das graphische Symbol 35. Der Eingabebetriebsmodus kann beispielsweise durch Betätigung einer der Tasten der alphanumerischen Tastatur 65 aktiviert werden. Der Eingabebetriebsmodus kann dabei beispielsweise als Menüpunkt eines Auswahlmenüs durch Wahl einer dieser Menüpunkte zugeordneten Ziffer an der alphanumerischen Tastatur 65 aktiviert werden. Es kann jedoch beispielsweise auch eine Aktivierung des Eingabebetriebsmodus durch Betätigung der Kontrolltaste 45 oder der Sendetaste 75 erfolgen. In Abhängigkeit der Abmessungen des Displays 10 kann der an der alphanumerischen Tastatur 65 im Eingabebetriebsmodus eingegebene Text vollständig oder nur teilweise am Display 10 dargestellt werden. Der Eingabebetriebsmodus kann durch Betätigen der Sendetaste 75 beendet werden, woraufhin der Benutzer zur Eingabe einer Rufnummer durch entsprechende Darstellung am Display 10 aufgefordert wird. Nach Eingabe einer Rufnummer an der alphanumerischen Tastatur 65 wird dann der im Eingabebetriebsmodus eingegebene Text in Form einer Kurznachricht beispielsweise gemäß dem Short-Message-Service (SMS) über die Sende-/Empfangsantenne 50 an den angewählten Teilnehmer über ein als Mobilfunknetz ausgebildetes Telekommunikations- oder Datennetz abgesendet.

Die erste Zahl 25, die zweite Zahl 30 und das graphische Symbol 35 werden im Eingabebetriebsmodus am Display 10 dargestellt. Dabei gibt die erste Zahl 25 die Anzahl der bereits im Eingabebetriebsmodus eingegebenen Textzeichen 40 an. Die Eingabe eines Textes für eine Kurznachricht im Eingabebetriebsmodus ist in der Regel auf einen ersten vorgegebenen Wert für die Anzahl der eingebbaren Textzeichen 40 begrenzt, beispielsweise auf 160 Textzeichen 40. Die zweite Zahl 30 entspricht dann dem ersten vorgegebenen Wert abzüglich der Anzahl der bereits in dem Eingabebetriebsmodus an der alphanumerischen Tastatur 65 eingegebenen Textzeichen 40. Mit anderen Worten gibt die zweite Zahl 30 an, wieviel Textzeichen 40 der Benutzer noch eingeben kann, bis er die maximal zulässige Textlänge erreicht. Im Ausführungsbeispiel gemaß Figur 1 zeigt die erste Zahl 25 den Wert 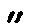 100" und die zweite Zahl 30 den Wert 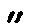 60" an. Das bedeutet, daß bei einer vorgegebenen maximalen Textlänge von 160 Zeichen für den ersten vorgegebenen Wert bereits 100 Textzeichen 40 im Eingabebetriebsmodus eingegeben wurden und noch 60 Textzeichen 40 für die Eingabe der Kurznachricht verbleiben. Die Summe der ersten Zahl 25 und der zweiten Zahl 30 ergibt somit immer den ersten vorgegebenen Wert von in diesem Beispiel 160. Das graphische Symbol 35 ist als Füllstandsanzeige ausgebildet. Die Füllstandsanzeige 35 stellt in Abhängigkeit der Anzahl der bereits in dem Eingabebetriebsmodus eingegebenen Textzeichen 40 und des die Anzahl der in dem Eingabebetriebsmodus eingebbaren Textzeichen 40 begrenzenden ersten vorgegebenen Wertes die Anzahl der noch verbleibenden eingebbaren Textzeichen 40 in Relation zu und zusammen mit der Anzahl der bereits eingegebenen Textzeichen 40 dynamisch dar. Dabei kann gemäß dem Ausführungsbeispiel nach Figur 1 die Füllstandsanzeige 35 vorzugsweise in Balkenform ausgebildet sein. Dabei kann die Anzahl der im Eingabebetriebsmodus maximal eingebbaren Textzeichen 40 durch die Länge eines Rechtecks repräsentiert sein. Das Rechteck füllt sich dann mit der Eingabe von Textzeichen 40 an der alphanumerischen Tastatur 65 dynamisch sukzessiv von links nach rechts. Dieser Füllvorgang kann dadurch am Display 10 dargestellt werden, daß das Rechteck beim Eingeben von Textzeichen 40 von links beginnend in einer von der Grundfarbe des Rechtecks verschiedenen Farbe eingefärbt wird. Durch den Füllvorgang wird das Rechteck in ein gefülltes und ein ungefülltes Rechteck aufgeteilt. Die Länge des ungefüllten Rechtecks repräsentiert dabei die Anzahl der noch verbleibenden eingebbaren Textzeichen 40 und die Länge des gefüllten Rechtecks repräsentiert in Relation dazu die Anzahl der bereits eingegebenen Textzeichen 40. Der Füllvorgang des Rechtecks erfolgt dynamisch, das heißt mit Eingabe der Textzeichen 40.

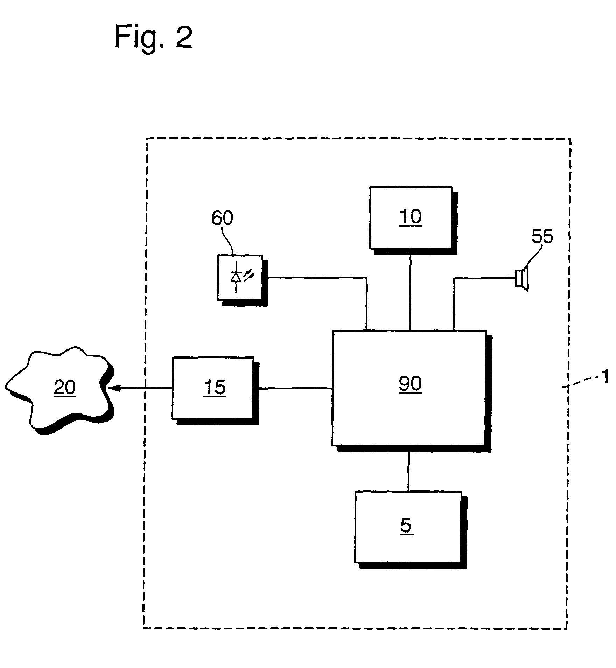

In Figur 2 ist ein Blockschaltbild des Mobiltelefons 1 dargestellt. Das Mobiltelefon 1 umfaßt dabei eine Steuerung 90, an die das Display 10, der Lautsprecher 55 und die Leuchtdiode 60 angeschlossen sind. An die Steuerung 90 ist außerdem eine Eingabeeinheit 5 angeschlossen. Die Eingabeeinheit 5 umfaßt dabei die alphanumerische Tastatur 65, die Kontrolltaste 45, die Hörertaste 70 und die Sendetaste 75. An die Steuerung 90 ist außerdem eine Sendeeinheit 15 angeschlossen. Von der Sendeeinheit 15 können Datensignale an einen Teilnehmer eines in diesem Ausführungsbeispiel als Mobilfunknetz ausgebildeten Telekommunikations- oder Datennetzes übertragen werden.

Die erste Zahl 25, die zweite Zahl 30 und das graphische Symbol 35 können als Kontrollinformation bezeichnet werden. Die Kontrollinformation 25, 30, 35 ist in dem Eingabebetriebsmodus an dem Display 10 darstellbar. Die Kontrollinformation 25, 30, 35 hängt von der Anzahl der im Eingabebetriebsmodus bereits eingegebenen Textzeichen 40 ab. Die Darstellung der Kontrollinformation 25, 30, 35 am Display 10 ist durch Betätigung der Kontrolltaste 45 im Eingabebetriebsmodus aktivierbar. Alternativ oder zusätzlich kann auch vorgesehen sein, daß die Darstellung der Kontrollinformation 25, 30, 35 am Display 10 in dem Eingabebetriebsmodus erst dann erfolgt, wenn ein zweiter vorgegebener Wert von der Anzahl der in dem Eingabebetriebsmodus bereits eingegebenen Textzeichen 40 überschritten wird. Falls diese Art der Aktivierung der Darstellung der Kontrollinformation 25, 30, 35 zusätzlich zur Aktivierbarkeit der Darstellung der Kontrollinformation 25, 30, 35 durch Betätigung der Kontrolltaste 45 vorgesehen ist, kann durch Betätigung der Kontrolltaste 45 die Darstellung der Kontrollinformation 25, 30, 35 am Display 10 auch schon vor Erreichen des zweiten vorgegebenen Wertes für die Anzahl der in dem Eingabebetriebsmodus bereits eingegebenen Textzeichen 40 gestartet werden.

Es kann weiterhin vorgesehen sein, daß bei Unterschreiten einer vorgegebenen Differenz zwischen dem die Anzahl der in dem Eingabebetriebsmodus eingebbaren Textzeichen 40 begrenzenden ersten vorgegebenen Wert und der Anzahl der in dem Eingabebetriebsmodus bereits eingegebenen Textzeichen 40 die Abgabe eines optischen und/oder eines akustischen Warnsignals erfolgt. Ein optisches Warnsignal kann dabei durch Aufleuchten, zum Beispiel durch Blinken der Leuchtdiode 60 erfolgen. Ein akustisches Warnsignal kann vom Lautsprecher 55 wiedergegeben werden.

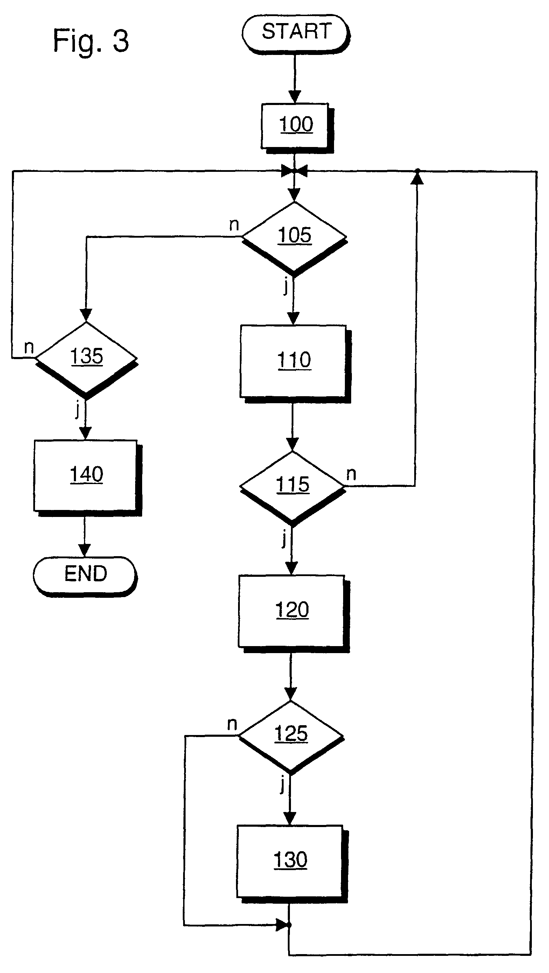

In Figur 3 ist ein Ablaufplan für die Funktionsweise der Steuerung 90 bezüglich der Darstellung der Kontrollinformation 25, 30, 35 am Display 10 dargestellt. Bei einem Programmpunkt 100 wird nach Betätigen einer entsprechenden Taste der alphanumerischen Tastatur 65 die Aktivierung des Eingabebetriebsmodus von der Steuerung 90 detektiert und eine Indexvariable i durch Nullsetzen initialisiert. Anschließend wird zu einem Programmpunkt 105 verzweigt. Bei Programmpunkt 105 prüft die Steuerung 90, ob an der alphanumerischen Tastatur 65 ein Textzeichen 40 eingegeben wurde. Ist dies der Fall, so wird zu einem Programmpunkt 110 verzweigt, andernfalls wird zu einem Programmpunkt 135 verzweigt. Bei Programmpunkt 110 veranlaßt die Steuerung 90 die Darstellung des eingegebenen Textzeichens 40 am Display 10 an der zuletzt durch das Leerzeichen 85 markierten Stelle und inkrementiert die Indexvariable i. Anschließend wird zu einem Programmpunkt 115 verzweigt. Bei Programmpunkt 115 prüft die Steuerung 90, ob die Indexvariable i den zweiten vorgegebenen Wert überschreitet oder die Kontrolltaste 45 gedrückt wurde. Ist dies der Fall, so wird zu einem Programmpunkt 120 verzweigt, andernfalls wird zu Programmpunkt 105 zurückverzweigt. Bei Programmpunkt 120 veranlaßt die Steuerung 90 das Display 10 zur Darstellung der aktuellen Kontrollinformation 25, 30, 35 am Display 10. Dabei entspricht die erste Zahl 25 dem aktuellen Wert der Indexvariablen i. Die zweite Zahl 30 entspricht dem ersten vorgegebenen Wert abzüglich dem aktuellen Wert der Indexvariablen i. Die Länge des gefüllten Rechtecks des graphischen Symbols 35 repräsentiert den aktuellen Wert der Indexvariablen i und die Länge des ungefüllten Rechtecks des graphischen Symbols 35 repräsentiert den ersten vorgegebenen Wert abzüglich dem aktuellen Wert der Indexvariablen i. Anschließend wird zu einem Programmpunkt 125 verzweigt. Bei Programmpunkt 125 prüft die Steuerung 90, ob eine Differenz zwischen dem die Anzahl der in dem Eingabebetriebsmodus eingebbaren Textzeichen 40 begrenzenden ersten vorgegebenen Wert und der Anzahl der in dem Eingabebetriebsmodus bereits eingegebenen Textzeichen 40 eine vorgegebene Differenz unterschreitet. Ist dies der Fall, so wird zu einem Programmpunkt 130 verzweigt, andernfalls wird zu Programmpunkt 105 zurückverzweigt. Bei Programmpunkt 130 veranlaßt die Steuerung 90 die Abgabe eines optischen und/oder eines akustischen Warnsignals mittels der Leuchtdiode 60 bzw. dem Lautsprecher 55. Anschließend wird zu Programmpunkt 105 zurückverzweigt. Bei Programmpunkt 135 prüft die Steuerung 90, ob die Sendetaste 75 betätigt wurde. Ist dies der Fall, so wird zu einem Programmpuunkt 140 verzweigt, andernfalls wird zu Programmpunkt 105 zurückverzweigt. Bei Programmpunkt 140 veranlaßt die Steuerung 90 das Beenden des Eingabebetriebsmodus. Anschließend schaltet die Steuerung 90 das Mobiltelefon 1 in einen Sendebetriebsmodus um und veranlaßt die Anzeigeeinheit 10 zur Darstellung einer Aufforderung für die Eingabe einer Rufnummer eines Teilnehmers des Mobilfunknetzes 20, an dem die im Eingabebetriebsmodus eingegebene Kurznachricht in Form der Textzeichen 40 gesendet werden soll. Nach Eingabe einer entsprechenden Rufnummer an der alphanumerischen Tastatur 65 veranlaßt die Steuerung 90 die Sendeeinheit 15 zur Übertragung der Kurznachricht an den angewählten Teilnehmer. Anschließend wird der Programmteil verlassen.

Das Telekommunikationsendgerät 1 kann auch als Schnurlostelefon, als Mobilfunkgerät, als Handfunkgerät, als Betriebsfunkgerät oder dergleichen ausgebildet sein. Das Telekommunikationsendgerät 1 kann jedoch auch als schnurgebundenes Telekommunikationsendgerät 1 ausgebildet sein. Das Telekommunikations- oder Datennetz 20 kann auch ein kombiniertes Funk- und Festleitungsnetz oder ein reines Festleitungsnetz, also ein schnurgebundenes Telekommunikationsnetz sein.

## Patentansprüche

1. Telekommunikationsendgerät (1) mit einer Eingabeeinheit (5), einer Anzeigeeinheit (10) und einer Sendeeinheit (15), wobei an der Eingabeeinheit (5) ein Text eingebbar und an der Anzeigeeinheit (10) darstellbar ist und ein eingegebener Text von der Sendeeinheit (15) an einen Teilnehmer eines Telekommunikations- oder Datennetzes (20) übertragbar ist, dadurch gekennzeichnet, daß in einem Eingabebetriebsmodus, in dem der Text an der Eingabeeinheit (5) eingegeben wird, eine Kontrollinformation (25, 30, 35) an der Anzeigeeinheit (10) darstellbar ist und daR die Kontrollinformation (25, 30, 35) von der Anzahl der bereits eingegebenen Textzeichen (40) abhängt.

2. Telekommunikationsendgerät (1) nach Anspruch 1, dadurch gekennzeichnet, daß die Darstellung der Kontrollinformation (25, 30, 35) an der Anzeigeeinheit (10) durch Betätigung einer Taste (45) im Eingabebetriebsmodus aktivierbar ist.

3. Telekommunikationsendgerät (1) nach Anspruch 1 oder 2, dadurch gekennzeichnet, daß die Kontrollinformation (25, 30, 35) eine erste Zahl (25) umfaßt und daß die erste Zahl (25) der Anzahl der bereits in dem Eingabebetriebsmodus eingegebenen Textzeichen (40) entspricht.

4. Telekommunikationsendgerät (1) nach Anspruch 1, 2 oder 3, dadurch gekennzeichnet, daß die Anzahl der eingebbaren Textzeichen (40) in dem Eingabebetriebsmodus auf einen ersten vorgegebenen Wert begrenzt ist, daß die Kontrollinformation (25, 30, 35) eine zweite Zahl (30) umfaßt und daß die zweite Zahl (30) dem ersten vorgegebenen Wert abzüglich der Anzahl der bereits in dem Eingabebetriebsmodus eingegebenen Textzeichen (40) entspricht.

5. Telekommunikationsendgerät (1) nach einem der vorherigen Ansprüche, dadurch gekennzeichnet, daß die Kontrollinformation (25, 30, 35) ein grafisches Symbol (35) umfaßt, daß das grafische Symbol (35) als Füllstandsanzeige ausgebildet ist und daß die Füllstandsanzeige (35) in Abhängigkeit der Anzahl der bereits in dem Eingabebetriebsmodus eingegebenen Textzeichen (40) und eines die Anzahl der in dem Eingabebetriebsmodus eingebbaren Textzeichen (40) begrenzenden ersten vorgegebenen Wertes die Anzahl der noch verbleibenden eingebbaren Textzeichen (40) in Relation zu und zusammen mit der Anzahl der bereits eingegebenen Textzeichen (40), vorzugsweise in Balkenform, dynamisch darstellt.

6. Telekommunikationsendgerät (1) nach einem der vorherigen Ansprüche, dadurch gekennzeichnet, daß bei Unterschreiten einer vorgegebenen Differenz zwischen einem die Anzahl der in dem Eingabebetriebsmodus eingebbaren Textzeichen (40) begrenzenden ersten vorgegebenen Wert und der Anzahl der in dem Eingabebetriebsmodus bereits eingegebenen Textzeichen (40) die Abgabe eines optischen und/oder eines akustischen Warnsignals erfolgt.

7. Telekommunikationsendgerät (1) nach einem der vorherigen Ansprüche, dadurch gekennzeichnet, daß die Darstellung der Kontrollinformation (25, 30, 35) an der Anzeigeeinheit (10) in dem Eingabebetriebsmodus erst dann erfolgt, wenn ein zweiter vorgegebener Wert von der Anzahl der in dem Eingabebetriebsmodus bereits eingegebenen Textzeichen (40) überschritten wird.
